# FASCICULE DE BREVET EUROPEEN

(11) **EP 3 011 191 B1**
(45) Date de publication et mention de la délivrance du brevet: **02.08.2017**
(21) Numéro de dépôt: 14739879.6
(22) Date de dépôt: 17.06.2014
(51) Int. Cl.: F16B 19/05, F16B 19/10

(54) **ASSEMBLAGE A LIAISON AUTO-SERRANTE EN TEMPÉRATURE**
ANORDNUNG MIT TEMPERATURABHÄNGIGER SELBSTSPANNENDER VERBINDUNG
ASSEMBLY HAVING A TEMPERATURE-DEPENDENT SELF-TIGHTENING CONNECTION

(30) Priorité: 18.06.2013 FR 1355705
(43) Date de publication de la demande: 27.04.2016
(73) Titulaire: Safran Ceramics, 33185 Le Haillan (FR)
(72) Inventeur: REVEL, Thomas, F-33200 Bordeaux (FR); CARRERE, Benoît, F-33320 Le Taillan Medoc (FR); MECUSON, Gautier, F-33200 Bordeaux (FR)
(74) Mandataire: Desormiere, Pierre-Louis
(86) Numéro de dépôt international: PCT/FR2014/051492
(87) Numéro de publication internationale: WO 2014/202891

(56) Documents cités:
- WO-A1-91/01456
- CA-A- 570 864
- GB-A- 1 185 196
- US-A- 2 482 391
- US-A- 2 505 915
- US-A- 3 724 614
- US-A- 4 687 394

## Description

### Arrière-plan de l'invention

L'invention concerne l'assemblage par liaison mécanique de pièces en matériau composite thermostructural, tel qu'un matériau composite à matrice céramique (CMC) ou carbone/carbone (C/C), matériau typiquement formé d'un substrat poreux, tel qu'un substrat fibreux poreux densifié par une matrice céramique. Les fibres du substrat peuvent être notamment en carbone ou céramique. La matrice est en une céramique réfractaire telle que, par exemple, carbure, nitrure, borure ou oxyde réfractaire. Les matériaux composites thermostructuraux sont remarquables par leurs propriétés mécaniques, qui les rendent aptes à constituer des éléments de structure, et par leur capacité à conserver ces propriétés à des températures élevées.

L'invention concerne plus particulièrement les comportements aérodynamique et thermique des liaisons mécaniques utilisées pour assembler des pièces en matériau composite thermostructural lorsque celles-ci sont destinées à être baignées dans des flux haute température, comme par exemple dans le cas de la fabrication de tout ou partie d'ensembles d'arrière-corps de moteur aéronautique tels que des cônes d'échappement (encore appelés « plugs » ou « exhaust ») ou de volets de tuyère à section variable.

Dans ces applications, les pièces à assembler sont en général relativement fines (épaisseur de quelques millimètres) et doivent répondre à des exigences aérodynamiques, ce qui conduit à utiliser préférentiellement des rivets pour réaliser les liaisons mécaniques entre les pièces. Dans le cas des assemblages utilisés pour réaliser des parties d'arrière-corps de moteur aéronautique, on utilise généralement des rivets présentant, d'un côté de l'assemblage, une tête fraisée logée dans une fraisure ménagée dans une des pièces à assembler et, de l'autre côté, une colonnette ou rondelle permettant une reprise des dilatations différentielles entre le rivets, qui se dilatent significativement, et les pièces en matériaux composite thermostructural, qui se dilatent peu. L'intégration de la tête du rivet dans une fraisure (voir par exemple WO 91/01456 A) présente d'un côté de l'assemblage permet d'obtenir de bonnes performances aérodynamiques mais seulement de ce côté de l'assemblage car la présence de la colonnette et d'une partie du corps du rivet de l'autre côté de l'assemblage crée une traînée importante.

Une autre solution utilisée dans la réalisation des volets de tuyère à section variable consiste à lier les pièces en matériau composite thermostructural avec des rivets, tels que ceux commercialisés sous la marque Fybrfast®, ces rivets comprenant, d'un côté, une tête et, de l'autre côté, une extrémité qui est écrasée et aplatie afin de fixer les pièces entre elles. Cependant, avec ce type de rivet, la tête et la partie du corps écrasée du rivet dépassent de chaque côté de l'assemblage et se trouvent, par conséquent, au-delà de la ligne aérodynamique de l'assemblage.

### Objet et résumé de l'invention

L'invention a pour but de proposer une solution pour l'assemblage de pièces en matériau composite utilisant un ou plusieurs systèmes de fixation qui présentent un coefficient de dilatation thermique supérieur au coefficient de dilatation thermique des pièces en matériau composite, le système de fixation ne devant pas ou très peu impacter les performances aérodynamiques de l'assemblage.

Ce but est atteint avec un assemblage comprenant une première pièce et une deuxième pièce en matériau composite maintenues l'une contre l'autre par au moins un système de fixation comprenant un rivet comportant une tête fraisée à partir de laquelle s'étend une tige comportant une extrémité élargie et une rondelle coopérant avec l'extrémité élargie de la tige du rivet, la tête du rivet étant en appui contre une fraisure ménagée dans la première pièce, la rondelle étant en appui sur la deuxième pièce. Conformément à l'invention, la rondelle présente sur sa face opposée à celle en appui sur la deuxième pièce une portion de forme conique et comporte en outre une fraisure centrale sur la surface de laquelle repose l'extrémité élargie de la tige du rivet.

Ainsi, l'assemblage de l'invention est réalisé avec des liaisons mécaniques qui sont totalement intégrées d'un côté de celui-ci (tête fraisée du rivet intégrée dans la fraisure de la première pièce) et qui présentent un profil aérodynamique de l'autre côté (extrémité élargie de la tige du rivet masquée à l'intérieur de la rondelle qui présente une portion de forme conique à l'extérieur). L'assemblage de l'invention peut, par conséquent, être baigné des deux côtés dans un flux haute température sans dégradation des performances aérodynamiques par les systèmes de liaison.

En outre, le système de fixation utilisé est conçu pour appliquer un effort de maintien continu par dilation radiale, ce qui permet de compenser la dilatation, en particulier axiale, de chaque système de fixation et de conserver un effort de serrage à chaud.

Selon un mode de réalisation de l'assemblage conforme à l'invention, la rondelle présente sur sa face en regard de la deuxième pièce une portion plane.

Selon un autre mode de réalisation de l'assemblage conforme à l'invention, la rondelle présente sur sa face en regard de la deuxième pièce une portion de forme conique en appui contre une fraisure ménagée dans ladite deuxième pièce. Dans ce mode de réalisation, la face externe de la rondelle peut être partiellement ou totalement intégrée dans la fraisure de la deuxième pièce, ce qui réduit encore l'impact aérodynamique du système de fixation sur l'assemblage.

Selon un aspect de l'assemblage de l'invention, le rivet et la rondelle sont en un matériau choisi par au moins un des matériaux suivants : Inconel® 725 ou 718, Waspaloy®, Haynes® 282®, acier inoxydable A286 et tout autre acier haute performance.

Selon un autre aspect de l'assemblage de l'invention, les première et deuxième pièces sont en matériau composite à matrice céramique.

Selon encore un autre aspect de l'assemblage de l'invention, les première et deuxième pièces présentent chacune une épaisseur inférieure à 3 mm.

Selon toujours un autre aspect de l'assemblage de l'invention, les première et deuxième pièces sont des pièces d'arrière-corps de moteur aéronautique.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels:
- la figure 1 est une vue schématique en perspective montrant la réalisation d'un assemblage conformément à un mode de réalisation de l'invention,
- les figures 2A et 2B sont des vues schématiques respectivement en coupe et de dessus montrant la suite de la réalisation de l'assemblage de la figure 1 ;
- la figure 3 est une vue schématique en perspective montrant la réalisation d'un assemblage conformément à un autre mode de réalisation de l'invention,
- les figures 4A et 4B sont des vue schématiques en coupe montrant la suite de l'assemblage de la figure 3.

### Description détaillée de mode de réalisation

La présente invention s'applique d'une manière générale à tout assemblage entre des pièces en matériau composite utilisant un ou plusieurs systèmes de fixation qui présentent un coefficient de dilatation thermique supérieur au coefficient de dilatation thermique des pièces en matériau composite, le système de fixation ne devant pas ou très peu impacter les performance aérodynamique de l'assemblage.

Les pièces à assembler peuvent être notamment en composite thermostructural à matrice céramique (CMC), c'est-à-dire tout matériau formé d'un renfort en fibres réfractaires (carbone ou céramique) densifié par une matrice céramique elle aussi réfractaire, tels que des matériaux C/SiC, SiC/SiC, C/C-SiC, etc. Les pièces peuvent être également en d'autres matériaux composites thermostructuraux présentant un faible coefficient de dilatation tels les matériaux C/C (renfort et matrice en carbone).

L'assemblage selon l'invention est notamment, mais non exclusivement, destiné à être utilisé pour la réalisation de tout ou partie d'ensembles d'arrière-corps de moteur aéronautique tels que des tuyères, des cônes d'échappement (encore appelés « plugs » ou « exhaust ») ou volets de tuyère à section variable. L'assemblage selon l'invention est particulièrement adapté pour l'assemblage de pièce présentant une faible épaisseur, par exemple inférieure ou égale à 3 mm.

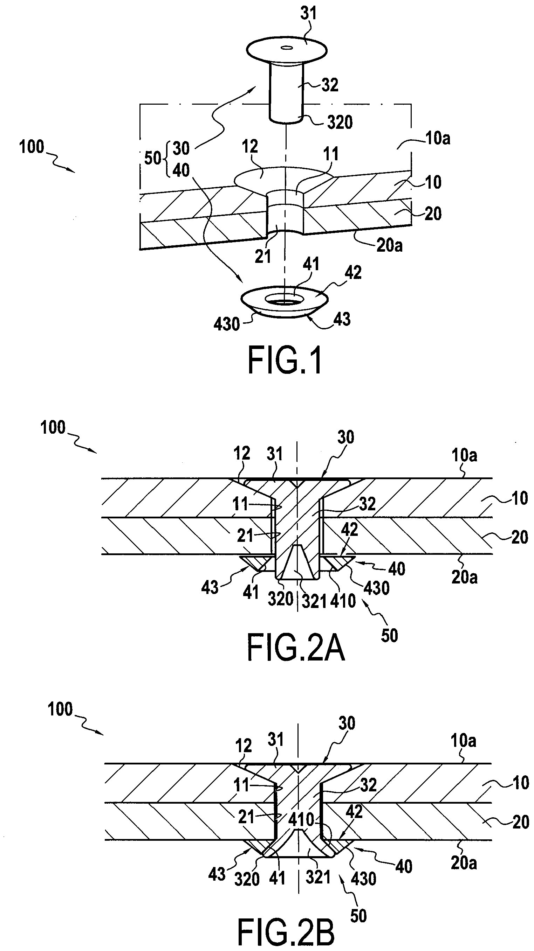

Les figures 1, 2A et 2B illustrent un assemblage conformément à un mode de réalisation de l'invention. Comme illustré sur la figure 1, un assemblage 100 entre deux pièces 10 et 20 en matériau composite thermostructural CMC est réalisé au moyen d'un système de fixation 50 comprenant un rivet 30 et une rondelle 40. Plus précisément, le rivet 30 comporte une tête fraisée 31 à partir de laquelle s'étend une tige 32 destinée à être placée dans des orifices 11 et 21 ménagés dans les pièces 10 et 20, la tête fraisée 31 étant logée dans une fraisure 12 ménagée dans la pièce 10. La rondelle 40 comporte une ouverture centrale 41 destinée à recevoir l'extrémité libre 320 de la tige 32. La rondelle 40 comporte également une première face plane 42 destinée à être plaquée sur la surface externe 20a de la deuxième pièce 20 et une deuxième face 43 opposée présentant une portion de forme conique 430. L'ouverture centrale 41 de la rondelle 40 comporte une fraisure 410. Le rivet 30 et la rondelle 40 peuvent être notamment réalisés en un des matériaux suivants : Inconel® 725 ou 718, Waspaloy®, Haynes® 282®, acier inoxydable A286 et tout autre acier haute performance.

Comme illustrée sur la figure 2A, le rivet 30 est positionné de manière à ce que la tige 32 traverse les orifices 11 et 21 et que la tête fraisée 31 repose dans la fraisure 12 tandis que la première face 42 de la rondelle 40 est plaquée contre la surface externe 20a de la pièce 20, l'extrémité libre 320 de la tige 32 étant présente dans l'ouverture 41. Comme illustrée sur la figure 2B, l'extrémité libre 320 qui comporte un évidement central 321 est élargie par écrasement de manière à rabattre les bords de l'extrémité 320 sur la fraisure 410 de l'ouverture centrale 41 de la rondelle 40. L'élargissement de l'extrémité libre peut être réalisé à chaud ou à froid en fonction du matériau constitutif du rivet à l'aide d'une bouterolle. Les deux pièces 10 et 20 sont alors solidarisées entre elles par rivetage.

Toujours comme illustré sur la figure 2B, on constate que du côté de la face externe 10a de la pièce 10, la tête 31 du rivet est totalement logée dans la fraisure 12 et n'a, par conséquent, pas d'impact sur l'aérodynamisme de la pièce 10 (surface plane ou « flush »). Du côté de la face externe 20a de la pièce 20, la face 43 de forme conique de la rondelle 40 présente un profil aérodynamique qui permet de réduire les perturbations aérodynamiques, l'extrémité élargie 320 de la tige 32 du rivet étant logée dans l'ouverture 41 de la rondelle 40.

En outre, lorsque l'assemblage 100 est soumis à des températures élevées, par exemple dans le cas où il est baigné dans un flux chaud de gaz de combustion, la dilatation radiale de la tête fraisée 31 permet de maintenir le contact avec la fraisure 12, et ce malgré la dilatation axiale du rivet 30. Un effet similaire de compensation se produit au niveau de la portion d'extrémité élargie 320 du rivet 30 en contact avec la fraisure 410 de l'ouverture 41 de la rondelle 40.

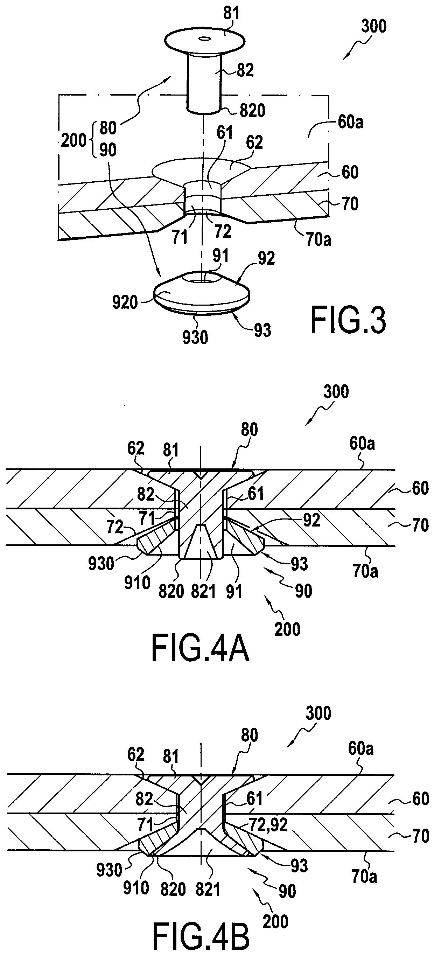

Les figures 3, 4A et 4B illustrent un assemblage conformément à un autre mode de réalisation de l'invention. Comme illustré sur la figure 3, un assemblage 300 entre deux pièces 60 et 70 en matériau composite thermostructural CMC est réalisé au moyen d'un système de fixation 200 comprenant un rivet 80 et une rondelle 90 qui sont placés dans des orifices 61 et 71 ménagés dans les pièces 60 et 70. Plus précisément, le rivet 80 comporte une tête fraisée 81 à partir de laquelle s'étend une tige 82 destinée à être placé dans des orifices 61 et 71 ménagés dans les pièces 60 et 70, la tête fraisée 81 étant logée dans une fraisure 62 ménagée dans la pièce 60. La rondelle 90 comporte une ouverture centrale 91 destinée à recevoir l'extrémité libre 820 de la tige 82. La rondelle 90 comporte également sur sa première face 92 en regard de la surface externe 70a de la pièce 70 une portion de forme conique 920 destinée à coopérer avec une fraisure 72 ménagée dans la pièce 70. La rondelle présente également sur sa deuxième face opposée 93 une portion de forme conique 930. L'ouverture centrale 91 de la rondelle 90 comporte une fraisure 910. Le rivet 80 et la rondelle 90 peuvent être notamment réalisés en un des matériaux suivants : Inconel® 725 ou 718, Waspaloy®, Haynes® 282®, acier inoxydable A286 et tout autre acier haute performance.

Comme illustrée sur la figure 4A, le rivet 80 est positionné de manière à ce que la tige 82 traverse les orifices 61 et 71 et que la tête fraisée 81 repose dans la fraisure 62 tandis que la première face 92 de la rondelle 90 est plaquée contre la fraisure 72 de la pièce 70, l'extrémité libre 820 de la tige 82 étant présente dans l'ouverture 91. Comme illustrée sur la figure 4B, l'extrémité libre 820 qui comporte un évidement central 821 est élargie par écrasement de manière à rabattre les bords de l'extrémité 820 sur la fraisure 910 de l'ouverture centrale 91 de la rondelle 90. L'élargissement de l'extrémité libre peut être réalisé à chaud ou à froid en fonction du matériau constitutif du rivet à l'aide d'une bouterolle. Les deux pièces 60 et 70 sont alors solidarisées entre elles par rivetage.

Toujours comme illustré sur la figure 4B, on constate que du côté de la face externe 60a de la pièce 10, la tête 81 du rivet est totalement logée dans la fraisure 62 et n'a, par conséquent, pas d'impact sur l'aérodynamisme de la pièce 10 (surface plane ou « flush »). Du côté de la face externe 70a de la pièce 70, la rondelle 90 est majoritairement logée dans la fraisure 72, seule la portion conique 930 de la deuxième face 93 de la rondelle dépassant légèrement de la surface 70a. Avec sa portion conique 930, la face 93 de la rondelle 40 présente un profil aérodynamique qui permet de réduire les perturbations aérodynamiques, l'extrémité élargie 820 de la tige 82 du rivet étant logée dans l'ouverture 91 de la rondelle 90.

En outre, lorsque l'assemblage 300 est soumis à des températures élevées, par exemple dans le cas où il est baigné dans un flux chaud de gaz de combustion, la dilatation radiale de la tête fraisée 81 permet de maintenir le contact avec la fraisure 62, et ce malgré la dilatation axiale du rivet 80. Un effet similaire de compensation se produit au niveau de la portion d'extrémité élargie 820 du rivet 80 en contact avec la fraisure 910 de l'ouverture 91 de la rondelle 90.

## Revendications

1. Assemblage (100) comprenant une première pièce (10) et une deuxième pièce (20) en matériau composite maintenues l'une contre l'autre par au moins un système de fixation (50) comprenant un rivet (30) comportant une tête fraisée (31) à partir de laquelle s'étend une tige (32) comportant une extrémité élargie (320) et une rondelle (40) coopérant avec l'extrémité élargie (320) de la tige (32) du rivet (30), la tête (31) du rivet (30) étant en appui contre une fraisure (12) ménagée dans la première pièce (10), la rondelle (40) étant en appui sur la deuxième pièce (20),
**caractérisé en ce que** ladite rondelle présente sur sa face (43) opposée à celle en appui sur la deuxième pièce (20) une portion de forme conique (430) et **en ce que** ladite rondelle (40) comporte en outre une fraisure centrale (410) sur la surface de laquelle repose l'extrémité élargie (320) de la tige (32) du rivet (30).

2. Assemblage selon la revendication 1, **caractérisé en ce que** la rondelle (40) présente sur sa face (42) en regard de la deuxième pièce (20) une portion plane.

3. Assemblage selon la revendication 1, caractérisé en que la rondelle (90) présente sur sa face (92) en regard de la deuxième pièce (70) une portion de forme conique (920) en appui contre une fraisure (72) ménagée dans ladite deuxième pièce.

4. Assemblage selon l'une quelconque des revendications 1 à 3, **caractérisé en ce que** le rivet (30 ; 80) et la rondelle (40 ; 90) sont en un haute performance.

5. Assemblage selon l'une quelconque des revendications 1 à 4, **caractérisé en ce que** les première et deuxième pièces (10, 20; 60, 70) sont en matériau composite à matrice céramique.

6. Assemblage selon l'une quelconque des revendications 1 à 5, **caractérisé en ce que** les première et deuxième pièces (10, 20; 60, 70) présentent chacune une épaisseur inférieure à 3 mm.

7. Assemblage selon l'une quelconque des revendications 1 à 6, **caractérisé en ce que** les première et deuxième pièces (10, 20; 60, 70) sont des pièces d'arrière-corps de moteur aéronautique.

## Patentansprüche

1. Anordnung (100), umfassend ein erstes Teil (10) und ein zweites Teil (20) aus Verbundwerkstoff, die durch wenigstens ein Fixiersystem (50), welches einen Niet (30) mit einem Senkkopf (31), von dem aus sich ein Schaft (32), der ein verbreitertes Ende (320) aufweist, erstreckt, sowie eine mit dem verbreiterten Ende (320) des Schaftes (32) des Niets (30) zusammenwirkende Scheibe (40) umfasst, aneinander gehalten werden, wobei der Kopf (31) des Niets (30) an einer Senkung (12), welche in dem ersten Teil (10) ausgebildet ist, in Anlage ist, wobei die Scheibe (40) an dem zweiten Teil (20) in Anlage ist,
**dadurch gekennzeichnet, dass** die Scheibe auf ihrer Seite (43), welche von der an dem zweiten Teil (20) in Anlage befindlichen abgewandt ist, einen kegelförmigen Abschnitt (430) aufweist und dass die Scheibe (40) ferner eine mittlere Senkung (410) umfasst, auf deren Fläche das verbreiterte Ende (320) des Schaftes (32) des Niets (30) aufliegt.

2. Anordnung nach Anspruch 1, **dadurch gekennzeichnet, dass** die Scheibe (40) auf ihrer Seite (42) gegenüber dem zweiten Teil (20) einen planen Abschnitt aufweist.

3. Anordnung nach Anspruch 1, **dadurch gekennzeichnet, dass** die Scheibe (90) auf ihrer Seite (92) gegenüber dem zweiten Teil (70) einen kegelförmigen Abschnitt (920), der an einer in dem zweiten Teil ausgebildeten Senkung (72) in Anlage ist, aufweist.

4. Anordnung nach einem der Ansprüche 1 bis 3, **dadurch gekennzeichnet, dass** der Niet (30; 80) und die Scheibe (40; 90) aus einem Hochleistungsstahl bestehen.

5. Anordnung nach einem der Ansprüche 1 bis 4, **dadurch gekennzeichnet, dass** das erste und das zweite Teil (10, 20; 60, 70) aus Keramikmatrix-Verbundwerkstoff bestehen.

6. Anordnung nach einem der Ansprüche 1 bis 5, **dadurch gekennzeichnet, dass** das erste und das zweite Teil (10, 20; 60, 70) jeweils eine Dicke von weniger als 3 mm aufweisen.

7. Anordnung nach einem der Ansprüche 1 bis 6, **dadurch gekennzeichnet, dass** das erste und das zweite Teil (10, 20; 60, 70) Teile eines Heckteils eines Luftfahrttriebwerks sind.

## Claims

1. An assembly (100) comprising first and second parts (10, 20) made of composite material and held against each other by at least one fastener system (50) comprising a rivet (30) having a flat head (31) from which there extends a shank (32) having an enlarged end (320), and a washer (40) co-operating with the enlarged end (320) of the shank (32) of the rivet (30), the head (31) of the rivet (30) bearing against a countersink (12) formed in the first part (10), the washer (40) bearing against the second part (20);
**characterized in that** said washer presents a portion of conical shape (430) on its face (43) opposite from its face bearing against the second part (20), and **in that** said washer (40) also includes a central countersink (410) with the enlarged end (320) of the shank (32) of the rivet (30) resting thereagainst.

2. An assembly according to claim 1, **characterized in that** the washer (40) presents a plane portion on its face (42) facing the second part (20).

3. An assembly according to claim 1, **characterized in that** the washer (90) presents a conically-shaped portion (920) on its face (92) facing the second part (70), which portion bears against a countersink (72) formed in said second part.

4. An assembly according to any one of claims 1 to 3, **characterized in that** the rivet (30 ; 80) and the washer (40 ; 90) are made of high-performance steel.

5. An assembly according to any one of claims 1 to 4, **characterized in that** the first and second parts (10, 20 ; 60, 70) are made of ceramic matrix composite material.

6. An assembly according to any one of claims 1 to 5, **characterized in that** each of the first and second parts (10, 20 ; 60, 70) presents thickness of less than 3 mm.

7. An assembly according to any one of claims 1 to 6, **characterized in that** the first and second parts (10, 20 ; 60, 70) are parts of an afterbody of an aeroengine.
